# EUROPÄISCHE PATENTSCHRIFT

(11) **EP 0 871 232 B1**
(45) Veröffentlichungstag und Bekanntmachung des Hinweises auf die Patenterteilung: **06.12.2000**
(21) Anmeldenummer: 98102315.3
(22) Anmeldetag: 11.02.1998
(51) Int. Cl.: H01M 2/02, H01M 10/40, H01M 2/12, H01M 2/04, H01M 10/04, H01M 10/02

(54) **Wiederaufladbare Lithium-Ionen-Zelle**
Lithium ion battery
Pile secondaire au lithium

(30) Priorität: 10.04.1997 DE 19714846
(43) Veröffentlichungstag der Anmeldung: 14.10.1998
(73) Patentinhaber: NBT GmbH, 30419 Hannover (DE)
(72) Erfinder: Bechtold, Dieter, 61118 Bad Vilbel (DE); Bartke, Dietrich, 65779 Kelkheim (DE); Krämer, Peter, 61462 Königstein (DE); Kretzschmar, Reiner, 65779 Kelkheim (DE); Vollbert, Jürgen, 65795 Hattersheim (DE)
(74) Vertreter: Kaiser, Dieter Ralf, Dipl.-Ing.

(56) Entgegenhaltungen:
- DE-A- 19 536 683
- US-A- 5 523 178
- PATENT ABSTRACTS OF JAPAN vol. 013, no. 068 (E-716), 16.Februar 1989 & JP 63 252362 A (BRIDGESTONE CORP), 19.Oktober 1988,
- PATENT ABSTRACTS OF JAPAN vol. 017, no. 393 (E-1402), 22.Juli 1993 & JP 05 074423 A (ASAHI CHEM IND CO LTD), 26.März 1993,

## Beschreibung

Die Erfindung betrifft eine wiederaufladbare Lithium-lonen-Zelle.

Wiederaufladbare Lithium-lonen-Zellen, insbesondere Zellen, die Energiemengen von 20 bis 100 Ah speichern können, erfordern Sicherheitseinrichtungen und eine konstruktive Gestaltung der Zelle, die verhindern, daß die Zellen durch Elektrolytverlust, Eindringen von Wasser und/oder Problemen mit der elektrischen Isolation beschädigt werden. Auch die Erwärmung der Zellen infolge eines hohen Innenwiderstandes bei der Belastung mit hohen Strömen ist problematisch. Es sind schon eine Reihe von wiederaufladbaren Lithium-lonen-Zellen bekannt, die das eine oder andere der genannten Probleme beim Betrieb der Zellen vermindern sollen. Insbesondere bei Verwendung von hochkapazitiven Zellen zum Bau von Batteriemodulen für den Einsatz von Elektrostraßenfahrzeugen sind jedoch die Anforderungen an die Sicherheit und Zuverlässigkeit der verwendeten Lithium-lonen-Zellen besonders hoch.

Die Erfindung hat sich die Aufgabe gestellt, wiederaufladbare Lithium-lonen-Zellen anzugeben, die den besonderen Anforderungen in Batteriemodulen von Elektrostraßenfahrzeugen gerecht werden.

Erfindungsgemäß geschieht das in der Weise, daß die Lithium-lonen-Zelle
a) ein metallisches Gehäuse besitzt, welches innen durch zwei die Elektrodenplatten und die Stromableiterfahnen überdeckende Halbschalen aus einem nichtleitenden Werkstoff und außen durch einen Isolationsüberzug elektrisch isoliert ist,
b) eine Berstmembran besitzt, welche sich über dem Elektrolytspiegel in der Normallage der Zelle befindet und
c) einen sich über die gesamte Fläche des Deckels erstreckenden Verdrehschutz besitzt, welcher zusätzlich Zentrier- und Montagefunktionen für das aus den Elektrodenplatten bestehende Elektrodenpaket aufweist.

Weitere vorteilhafte Ausgestaltungen der Erfindung sind in den Ansprüchen 2 bis 4 dargelegt. Die erfindungsgemäßen wiederaufladbaren Lithium-lonen-Zellen werden, wie in den Ansprüchen 5 und 6 dargelegt, hergestellt. Die Erfindung umfaßt auch die im Anspruch 7 dargelegte Verwendung.

Die Gesamtheit der erfindungsgemäßen konstruktiven Merkmale der Lithium-lonen-Zelle trägt den besonderen Anforderungen hinsichtlich der Sicherheit und der mechanischen Belastungen von Zellen beim Einsatz in Elektrostraßenfahrzeugen Rechnung. So wird aufgrund der Druckstabilität und der Sicherheit gegen die mechanische Zerstörung der Zellen ein Zellengehäuse aus Edelstahl bevorzugt. Da metallische Zellengehäuse leitfähig sind, wird das Zellengehäuse gern als Elektrodenpol genutzt. Allerdings steigt dadurch auch die Gefahr eines Kurzschlusses, denn ein geringfügiger Kontakt der Gegenelektrode mit der Zellenwandung reicht für eine Kurzschlußbildung aus. Erfindungsgemäß wird durch die innere und äußere Isolation des Zellengehäuses eine hohe Kurzschlußsicherheit erzeugt. Die Elektroden sind durch diese umschließende, ineinandergeschachtelte, elektrolytbeständige Halbschalen aus einem nichtleitfähigem Werkstoff, wie Polyvinylidendifluorid (PVdF) elektrisch gegen die Gehäusewandungen isoliert. Zusätzlich sorgt ein Schutzlacküberzug oder eine isolierende Schrumpfschlauchfolie, die bis ca 10 mm unter den oberen Rand des Zellengefäßes reichen und eine über den Deckel der Zelle gestülpte Abdeckhaube aus einem Isolationswerkstoff wie Polyethylenterephthalat (PET) für die äußere Isolation der erfindungsgemäßen Zelle.

Erfindungsgemäß werden der positive Elektrodenpol aus Titan oder aus aluminium-beschichtetem Kupfer und der negative Elektrodenpol aus Kupfer hergestellt. Damit ist zum einen eine sehr gute elektrochemische Beständigkeit der Lithium-lonen-Zelle sichergestellt und zum anderen wird der elektrische Widerstand gering gehalten. Vorteilhafterweise wird dadurch bei Hochstrombelastungen die Erwärmung der Zelle und damit der irreversible Energieverlust verringert.

Bei Zellen, in denen mehrere Elektrodenplatten mit dem Elektrodenpol verbunden werden, werden erfindungsgemäß die positiven Stromableiter durch Ultraschallschweißung mit einem Aluminiumniet verbunden und dieser durch Nietung, insbesondere Taumelnietung, mit dem positiven Elektrodenpol verbunden. Die Kupferableiterfahnen der negativen Elektrodenplatten werden mit einem Kupferniet verschweißt und an den negativen Elektrodenpol angenietet. Die vorgeschlagene Verbindung der Elektrodenplatten mit den Elektrodenpolen führt zum einen durch die Entfernung der widerstandserhöhenden Oxidschichten, zum anderen durch eine die Oberfläche der Elektrodenpole nicht verletzende Verbindung zu einer mit Strömen von 10 bis 300 Ampere belastbaren Zelle, die mechanisch, d.h. gegen die im Fahrzeugbetrieb auftretenden Erschütterungen, stabil ist.

Die erfindungsgemäßen wiederaufladbaren Lithium-lonen-Zellen sind weiterhin dadurch charakterisiert, daß sie über dem Elektrolytspiegel der Zellen in deren Normallage eine Berstmembran besitzen. Im Falle der Beschädigung der Berstmembran tritt allein durch die Schwerkrafteinwirkung kein Elektrolyt aus.

Vorteilhafterweise sind die Elektrodenpole als Keramikmetalldurchführungen ausgeführt. Die vorgefertigten Durchführungselemente werden mit ihrem Schweißbund aus VA-Material mit dem in den Zellendeckel eingezogenen Bund aus dem gleichen Material verschweißt. Die Elektrodenplatten werden mit den isolierenden Halbschalen umhüllt und in das Zellengehäuse eingeschoben. Das eigentliche Verschließen der Zellen erfolgt beispielsweise durch die Laserverschweißung von Deckel und Zellengefäß. Damit wird eine hermetisch dicht verschlossene Zelle erhalten, bei der das die lebensdauer-verringernde Eindringen von Wasser vermieden wird. Weiterhin gestattet die vorgeschlagene Zelle und das Verfahren zu ihrer Herstellung die Vereinfachung der Montage, eine kostengünstige Fertigung durch Reduzierung der Anzahl der benötigten Bauteile und eine größere Sicherheit der Zellen sowie ihrer Fertigung.

Die Erfindung wird nachfolgend anhand der Figuren 1 - 9 näher dargestellt.

Es zeigen:
- Fig. 1:: Die Schnittdarstellung einer erfindungsgemäßen Zelle
- Fig. 2:: Eine Teilschnittdarstellung der Seitenansicht
- Fig. 3:: Die Schnittdarstellung des Verdrehschutzes
- Fig. 4:: Die Draufsicht auf den Verdrehschutz
- Fig. 5:: Die Seitenansicht einer isolierenden Halbschale
- Fig. 6:: Die perspektivische Ansicht einer isolierenden Halbschale
- Fig. 7:: Die Schnittdarstellung der Abdeckhaube
- Fig. 8:: Die Draufsicht auf die Abdeckhaube

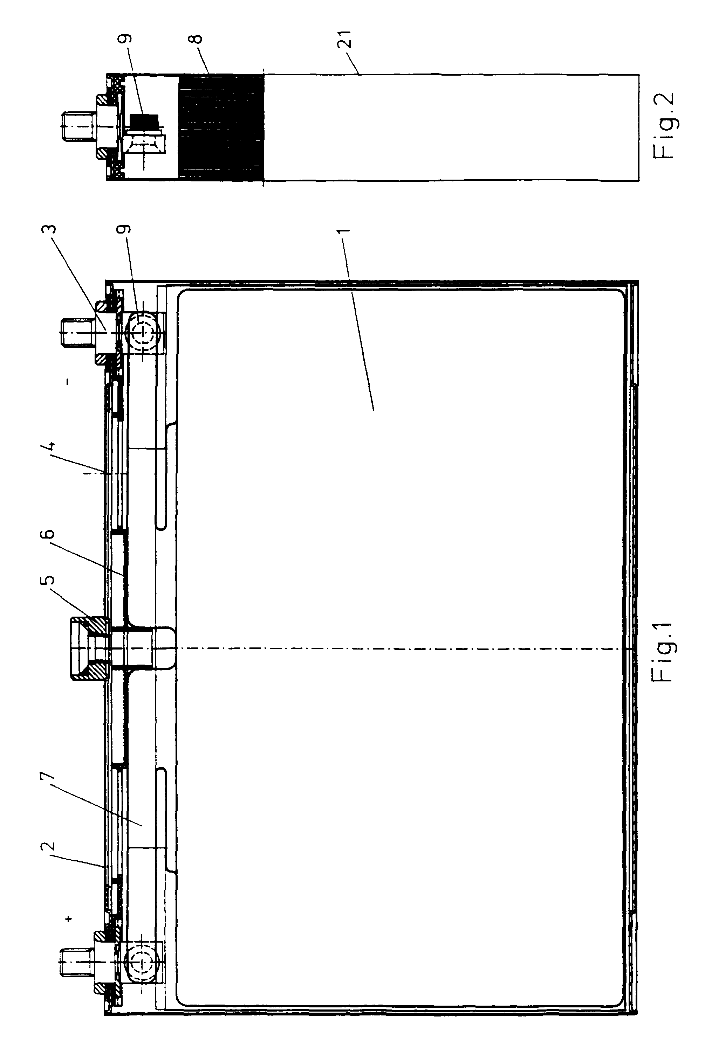

Die Figuren 1 und 2 zeigen Schnittdarstellungen der erfindungsgemäßen Zelle 1. Dabei sind im Deckel 2 die Elektrodenpole 3, eine Berstmembran 4 und der Befülldom 5 integriert. Über die Innenseite des Deckels 2 erstreckt sich ein Verdrehschutz 6, der Durchgänge 10, 11 zur Berstmembran 4 und zum Befülldom 5 aufweist. An den Elektrodenpolen 3 sind die Stromableiterfahnen 7 der Elektrodenplatten 8 mit Nieten 9 befestigt, wobei die Nieten 9 mit den Stromableiterfahnen 7 mittels Ultraschallschweißung verbunden sind. Die Stromableiterfahnen 7 der positiven Elektrodenplatten 8 bestehen vorzugsweise aus Aluminium und werden mit einem Aluminiumniet 9 verschweißt und durch Taumelnietung an dem mit ca. 50 µm Reinaluminium beschichteten positiven Elektrodenpol 3 befestigt. Die Stromableiterfahnen 7 der negativen Elektrodenplatten 8 bestehen vorzugsweise aus Kupfer und werden mit einem Kupferniet 9 verschweißt sowie an den negativen Elektrodenpol 3 angenietet.

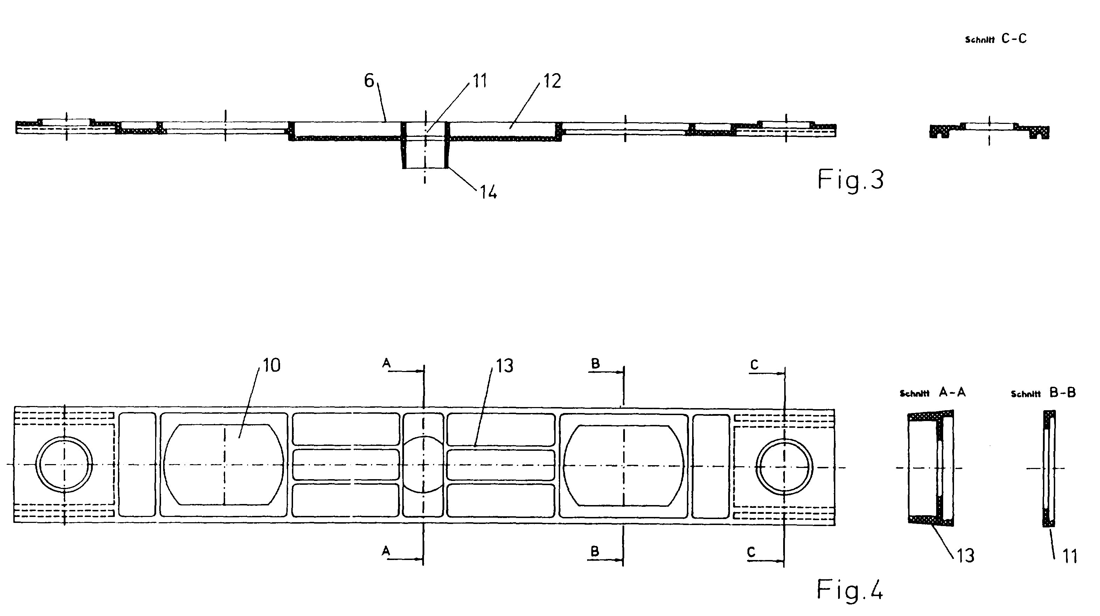

Die Figuren 3 und 4 zeigen die Schnittdarstellung und die Draufsicht auf den Verdrehschutz 6. Der Verdrehschutz 6 besitzt Durchgänge 10, 11 zur Berstmembran 4 und dem Befülldom 5. Die Durchgänge 10 zur Berstmembran 4 sind symmetrisch zur Schnittachse A - A angeordnet. Dadurch wird die Montage hinsichtlich der Lageorientierung zur Berstmembran 4 vereinfacht. Bei schmalen Zellen 1, d.h. bei Zellen 1, deren Elektrodenpole 3 relativ dicht beieinanderstehen, wird auf die Durchgänge 10 verzichtet und die Berstmembran 4 in dem Befülldom 5 eingeschweißt. Die Berstmembran 4 wird dann erfindungsgemäß erst nach dem Befüllen der Zelle 1 mit Elektrolyt und nach den anschließenden Inbetriebnahmezyklen in den Berstmembrandom 5 eingebracht. Vorteilhafterweise wird dazu ein Laser benutzt, der die mechanische Belastung der Berstmembran 4 gering hält und einen geringen Wärmeeintrag in die Zelle 1 verursacht. Durch die Einbringung der Berstmembran 4 als letzter Schritt der Fertigung kann diese während der Fertigung nicht beschädigt werden. Desweiteren wurde der Verbrauch an diesem kostenaufwendigen Bauteil auf die Anzahl der funktionsfähigen Zellen 1 beschränkt, da defekte Zellen 1 vor dem Einbringen der Berstmembran 4 aussortiert werden können. Der Verdrehschutz 6 besitzt weiterhin einen verstärkten Bereich 12, der sich oberhalb des Anschlußbereiches der Stromableiterfahnen 7 an die Elektrodenplatten 8 erstreckt. Der Bereich 12 ist mit Rippen 13 verstärkt und wird zu den Stromableiterfahnen 7 hin abgesenkt. Damit wird das Einschieben des am Deckel 2 befestigten und aus den einzelnen Elektrodenplatten 8 bestehenden Elektrodenpakets mechanisch unterstützt. Der Verdrehschutz 6 weist außerdem einen zwischen den Stromableiterfahnen 7 der unterschiedlichen Polaritäten reichenden Abschnitt 14 auf, der die Lage der Elektrodenplatten 8 zueinander zentriert, die Befüllung mit Elektrolyt gestattet und die Kurzschlußgefahr im Bereich der Stromableiterfahnen 7 vermindert. Die Schnitte A - A, B - B und C - C zeigen die jeweiligen Gestaltungen des Verdrehschutzquerschnittes.

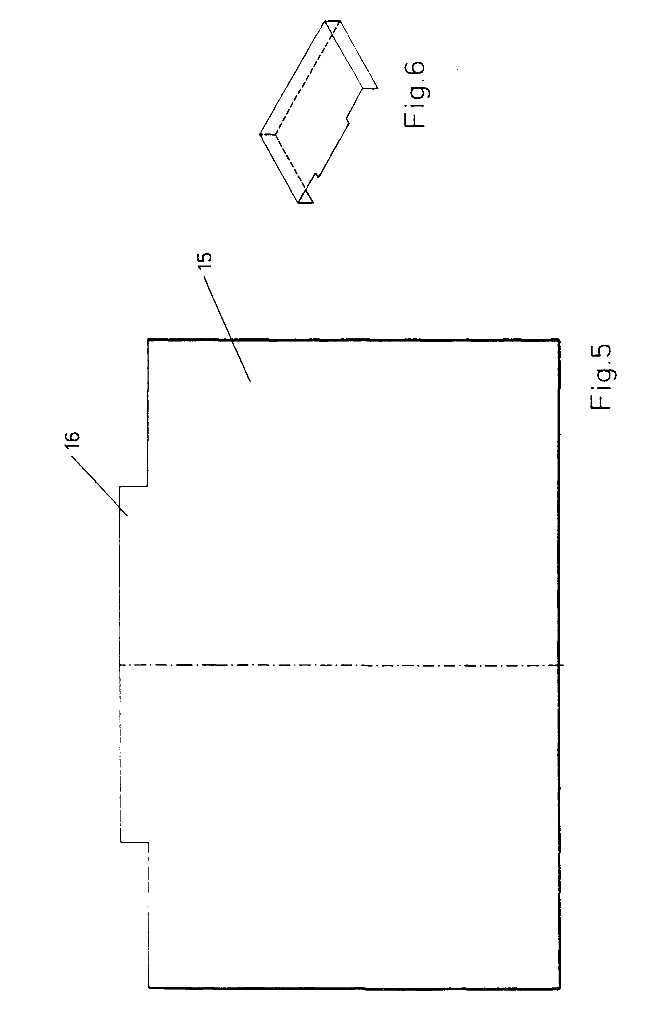

Die Figuren 5 und 6 zeigen die Halbschalen 15, die aus einem elektrolytbeständigen, elektrisch nichtleitenden Werkstoff hergestellt sind. Vorzugsweise werden die Halbschalen 15 aus Polyvinylidendifluorid oder einem Co-Polymer mit Hexafluoropropylen hergestellt. Die Halbschalen 15 werden so ineinander geschachtelt,daß sie das Elektrodenpaket umschließen. Mit der Lasche 16 wird der Bereich des Anschlusses der Stromableiterfahnen 7 an die Elektrodenplatten 8 vor einem Kontakt mit dem Zellengehäuse 21 geschützt. Selbst bei einem Durchscheuern des Separators sind die Elektrodenplatten 8 durch die Halbschalen 15 gegen einen Kontakt mit dem Zellengehäuse 21 geschützt.

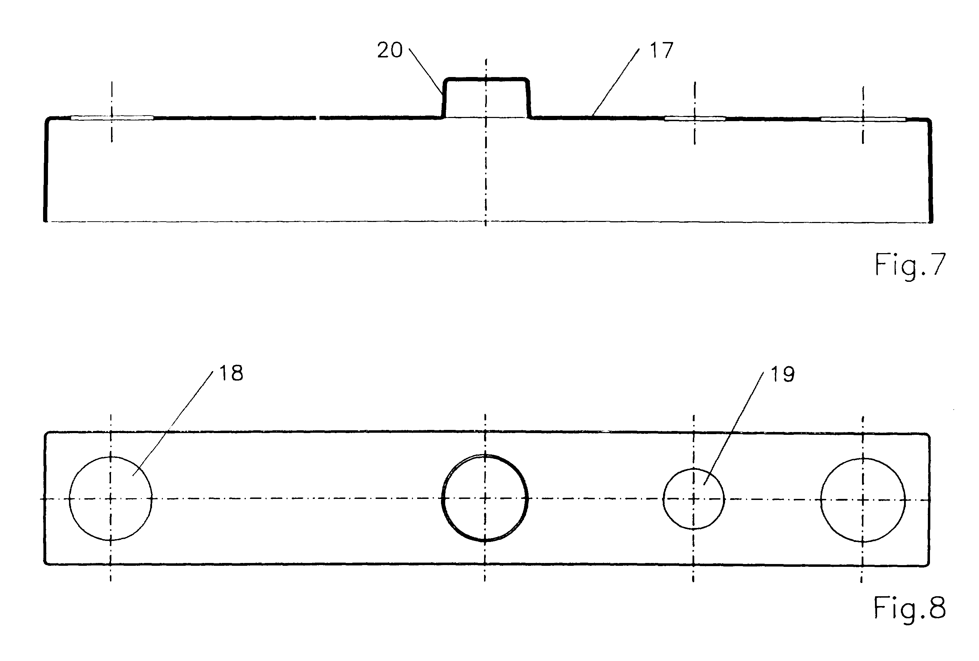

Der elektrischen Isolation der Zelle 1 dient neben dem aus Verdrehschutz 6 und den Halbschalen 15 gebildeten Schutz im Inneren der Zelle 1 eine äußere elektrische Isolation des Zellengehäuses 21. Das Zellengehäuse 21 wird dazu bis ca. 10 mm unter dem oberen Rand des Zellengefäßes 21 mit einem Schutzlacküberzug isoliert. Über den Deckel 2 der Zelle 1 wird die in den Figuren 7 und 8 dargestellte Abdeckhaube 17 gestülpt. Die Abdeckhaube 17 weist Öffnungen 18, 19 für die Elektrodenpole 3 und zur Berstmembran 4 auf. Der Befülldom 5 wird von dem Dom 20 der Abdeckhaube 17 überdeckt. Bei den bereits erwähnten schmalen Zellen, bei denen die Berstmembran 4 in den Befülldom 5 integriert ist, ist dementsprechend die Öffnung 19 im Dom 20 der Abdeckhaube 17 vorgesehen.

## Patentansprüche

1. Wiederaufladbare Lithium-lonen-Zelle prismatischer Gestalt mit einer Vielzahl von Elektrodenplatten, dadurch gekennzeichnet, daß die Zelle (1)
a) ein metallisches Gehäuse (21) besitzt, welches innen durch zwei die Elektrodenplatten (8) und die Stromableiterfahnen (7) überdeckende Halbschalen (15) aus einem nichtleitenden Werkstoff und außen durch einen Isolationsüberzug elektrisch isoliert ist,
b) eine Berstmembran (4) besitzt, welche sich über dem Elektrolytspiegel der Zelle (1) in ihrer Normallage befindet und
c) einen sich über die gesamte Fläche des Deckels (2) erstreckenden Verdrehschutz (6) besitzt, welcher zusätzlich Zentrier- und Montagefunktionen für das aus den Elektrodenplatten (8) bestehende Elektrodenpaket aufweist.

2. Zelle nach Anspruch 1, dadurch gekennzeichnet, daß die elektrische Isolation im Inneren Zelle (1) aus zwei ineinander geschachtelten Halbschalen (15) und dem Verdrehschutz (6) besteht, wobei der Verdrehschutz (6) zum Deckel hin Durchgänge (10,11) zur Berstmembran (4) und zum Befülldom (5) besitzt und die Zelle außen mit einem Schutzlacküberzug sowie einer Abdeckhaube (17) versehen ist.

3. Zelle nach Anspruch 1, dadurch gekennzeichnet, daß die Elektrodenpole (3) aus Kupfer bestehen, wobei der positive Elektrodenpol (3) im Inneren der Zelle (1) mit Reinaluminium beschichtet ist.

4. Zelle nach Anspruch 3, dadurch gekennzeichnet, daß die Elektrodenpole (3) durch eine Keramikmetalldurchführung elektrolytdicht mit dem Zellengehäuse verbunden sind.

5. Verfahren zur Herstellung einer wiederaufladbaren Lithium-lonen-Zelle gemäß Anspruch 1, dadurch gekennzeichnet, daß
a) die Stromableiterfahnen (7) der positiven Elektrodenplatten (8) mit einem Aluminiumniet (9) verschweißt und an den positiven Elektrodenpol (3) und die Stromableiterfahnen (7) der negativen Elektrodenplatten (8) mit einem Kupferniet (9) verschweißt und an den negativen Elektrodenpol (3) angenietet werden,
b) das aus den Elektrodenplatten (8) bestehende Elektrodenpaket mit den Halbschalen (15) umhüllt und in das Zellengefäß (21) eingeschoben,
c) der Deckel (2) mit dem Zellengefäß (21) verschweißt,
d) die Zelle (1) über den Befülldom (5) mit Elektrolyt befüllt und durch Zyklisieren in Betrieb gesetzt und
e) der Befülldom (5) nach Inbetriebnahme der Zelle (1) elektrolytdicht verschlossen wird.

6. Verfahren nach Anspruch 5, dadurch gekennzeichnet, daß der elektrolytdichte Verschluß der Zelle (1) mittels Laserverschweißung vorgenommen wird.

7. Verwendung einer wiederaufladbaren Lithium-Ionen-Zelle gemäß einem oder mehreren der Ansprüche 1 bis 4 als Bordnetzbatterie für Kraftfahrzeuge.

## Claims

1. Rechargeable lithium-ion cell having a prismatic shape and a multiplicity of electrode plates, characterized in that the cell (1)
a) has a metallic housing (21) which is electrically insulated internally by two half shells (15), which cover the electrode plates (8) and the main output tabs (7) and are composed of a non-conductive material, and is electrically insulated externally by means of an insulation coating,
b) has a bursting membrane (4) which, in its normal position, is located above the electrolyte level of the cell (1), and
c) has twisting protection (6) which extends over the entire surface of the cover (2) and additionally has centring and assembly functions for the electrode package, which comprises the electrode plates (8).

2. Cell according to Claim 1, characterized in that the electrical insulation in the interior of the cell (1) comprises two half shells (15), which are interleaved in one another, and the twisting protection (6), the twisting protection (6) having, towards the cover, passages (10, 11) for the bursting membrane (4) and for the filling dome (5), and the cell being provided externally with a protective varnish coating as well as a covering cap (17).

3. Cell according to Claim 1, characterized in that the electrode poles (3) are composed of copper, the positive electrode pole (3) being coated in the interior of the cell (1) with pure aluminium.

4. Cell according to Claim 3, characterized in that the electrode poles (3) are connected in an electrolyte-tight manner to the cell housing by means of a ceramic metal bushing.

5. Method for manufacturing a rechargeable lithium-ion cell according to Claim 1, characterized in that
a) the main output tabs (7) of the positive electrode plates (8) are welded to an aluminium rivet (9) and are riveted to the positive electrode pole (3), and the main output tabs (7) of the negative electrode plates (8) are welded to a copper rivet (9) and are riveted to the negative electrode pole (3),
b) the electrode package, which comprises the electrode plates (8), is sheathed with the half shells (15) and is pushed into the cell container (21),
c) the cover (2) is welded to the cell vessel (21),
d) the cell (1) is filled with electrolyte via the filling dome (5) and is caused to operate by cycling, and
e) the filling dome (5) is sealed in an electrolyte-tight manner after the cell (1) has been brought into use.

6. Method according to Claim 5, characterized in that the electrolyte-tight sealing of the cell (1) is carried out by means of laser welding.

7. Application of a rechargeable lithium-ion cell according to one or more of Claims 1 to 4 as a power supply battery for motor vehicles.

## Revendications

1. Pile au lithium rechargeable de forme prismatique, comprenant plusieurs électrodes en forme de plaque,
caractérisée en ce que
a) la pile possède un boîtier métallique (21) isolé électriquement, à l'intérieur, par deux demi-coquilles (15) recouvrant les électrodes en forme de plaque (8) et les chemins conducteurs de courant (7), ces demi-coquilles étant en une matière non-conductrice électrique et, à l'extérieur, le boîtier est isolé électriquement par un revêtement d'isolation,
b) la pile (1) comporte une membrane d'éclatement (4) qui se trouve au-dessus du niveau d'électrolyte de la pile (1) en position normale, et
c) un détrompeur (6) s'étend sur toute la surface du couvercle (2) qui présente en outre des fonctions de centrage et de montage pour le paquet d'électrodes constitué par des électrodes en forme de plaque (8).

2. Pile selon la revendication 1,
caractérisée en ce que
l'isolation électrique à l'intérieur de la pile (1) est formée par deux demi-coquilles imbriquées (15) et par le détrompeur (6), le détrompeur (6) ayant des passages (10, 11) vers le couvercle pour la membrane d'éclatement (4) et le dôme de remplissage (5), tandis que et la pile est munie extérieurement d'un revêtement de vernis protecteur et d'un chapeau (17).

3. Pile selon la revendication 1,
caractérisée en ce que
les électrodes formant les pôles (3) sont en cuivre, le pôle positif (3) étant revêtu d'aluminium pur à l'intérieur de la pile (1).

4. Pile selon la revendication 3,
caractérisée en ce que
les électrodes des pôles (3) sont reliées au boîtier de la pile de manière étanche à l'électrolyte par un passage métal/céramique.

5. Procédé de fabrication d'une pile au lithium rechargeable selon la revendication 1,
caractérisé en ce qu'
a) on soude les chemins conducteurs de courant (7) des électrodes en forme de plaque (8), positives, avec un rivet en aluminium (9) et on relie l'électrode du pôle positif (3), et l'on soude les chemins conducteurs de courant (7) des électrodes en forme de plaque (8), négatives, avec un rivet en cuivre (9) et on rivette sur l'électrode (3) du pôle négatif,
b) on enveloppe le paquet d'électrodes composé des électrodes en forme de plaque (8) avec les demi-coquilles (15) et l'on glisse dans la cuve (21) de la pile,
c) on soude le couvercle (2) au boîtier (21) de la pile,
d) on remplit la pile (1) en utilisant le dôme de remplissage (5) pour y introduire l'électrolyte, et on établit un fonctionnement cyclique, et
e) on ferme, le dôme de remplissage (5) de manière étanche à l'électrolyte après mise en route de la pile (1).

6. Procédé selon la revendication 5
caractérisé en ce que
la fermeture de la pile (1) de manière étanche à l'électrolyte, est faite par soudage au laser.

7. Application d'une pile au lithium rechargeable selon l'une quelconque des revendications 1 à 4, comme batterie de bord pour véhicules.
